# FASCICULE DE BREVET EUROPEEN

(11) **EP 3 895 923 B1**
(45) Date de publication et mention de la délivrance du brevet: **03.05.2023**
(21) Numéro de dépôt: 21164397.8
(22) Date de dépôt: 23.03.2021
(51) Int. Cl.: B60K 1/00, B60K 6/48

(54) **SYSTEME D'AIDE AU CENTRAGE D'UN ARBRE DE ROTOR ET D'UN ARBRE PRIMAIRE COMPLEMENTAIRE DE TRANSMISSION D'UN GROUPE MOTOPROPULSEUR ELECTRIQUE**
HILFSSYSTEM ZUR ZENTRIERUNG EINER ROTORWELLE UND EINER KOMPLEMENTÄREN PRIMÄREN ÜBERTRAGUNGSWELLE EINER ELEKTRISCHEN MOTORANTRIEBSANLAGE
SYSTEM TO ASSIST WITH THE CENTRING OF A ROTOR SHAFT AND A SUPPLEMENTARY PRIMARY TRANSMISSION SHAFT OF AN ELECTRIC POWER TRAIN

(30) Priorité: 14.04.2020 FR 2003735
(43) Date de publication de la demande: 20.10.2021
(73) Titulaire: Renault s.a.s, 92100 Boulogne Billancourt (FR)
(72) Inventeur: DUMAS, Eric, 78800 HOUILLES (FR); MARCHAL, Nicolas, 78330 Le Fleury (FR)
(74) Mandataire: Renault Group

(56) Documents cités:
- DE-A1-102010 034 130
- FR-A1- 2 830 066
- JP-A- 2009 280 174

## Description

### Domaine technique de l'invention

L'invention concerne un groupe motopropulseur de véhicule automobile, notamment du type qui comporte une machine électrique et un mécanisme de transmission - tel que par exemple un mécanisme réducteur différentiel - qui sont adjacents et accouplés axialement. L'invention concerne un système d'aide au centrage et à l'introduction axiale d'un tronçon d'extrémité libre d'un arbre de rotor à l'intérieur d'un tronçon d'extrémité libre d'un arbre primaire creux complémentaire de transmission.

### Arrière-plan technique

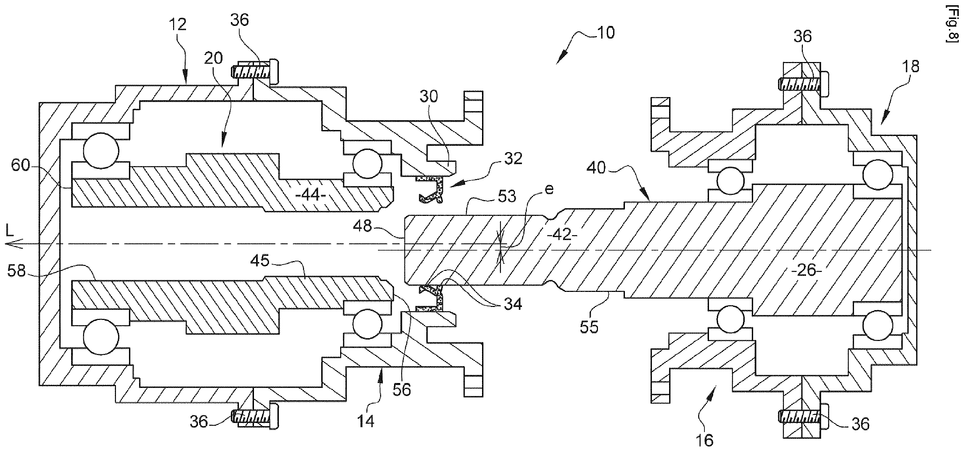

On a représenté schématiquement à la figure 8, une architecture d'un groupe motopropulseur électrique 10 qui met en oeuvre un tronçon d'extrémité libre avant 42 de l'arbre de rotor 40 de la machine électrique (qui est un tronçon cannelé extérieurement 55) qui doit être introduit axialement à l'intérieur du tronçon d'extrémité libre arrière 44 de l'arbre primaire de transmission 20 qui est creux et qui est cannelé intérieurement 45 de manière complémentaire.

Lors de son introduction axiale, le tronçon - cannelé extérieurement - d'extrémité libre avant 42 de l'arbre de rotor 40 de la machine électrique doit traverser une bague d'étanchéité 32.

A l'issue des opérations de montage et d'assemblage, la bague d'étanchéité 32 coopère avec une partie de l'arbre de rotor 40 - adjacente à son tronçon cannelé extérieurement 53 - qui délimite une portée cylindrique lisse 55.

La bague d'étanchéité 32 comporte par exemple une ou plusieurs lèvres d'étanchéité 34 radialement intérieures qui coopèrent avec cette portée lisse 55

Lors de l'assemblage axial des deux arbres 20 et 40 et de l'accouplement des deux tronçons cannelés complémentaires, si les deux arbres et leurs tronçons cannelés ne sont pas parfaitement coaxiaux, il existe un risque de contact entre les cannelures extérieures 53 de l'arbre du rotor 40 et les lèvres d'étanchéité 34 de la bague d'étanchéité 32.

Dans un tel cas, lors de la course d'introduction axiale, des cannelures extérieures 53 à arêtes vives glissent axialement le long des lèvres d'étanchéité 34.

Cette situation présente de grands risques de détériorer définitivement les lèvres d'étanchéité 34 car les arêtes vives se comportent comme des lames métalliques tranchantes que l'on fait glisser le long des lèvres d'étanchéité en matériau souple, et par exemple en polytétrafluoroéthylène (PTFE).

L'invention vise à proposer une solution à ce problème d'assemblage en supprimant les risques de détérioration de la bague d'étanchéité.

FR 2 830 066 A1 divulgue un système d'aide au centrage d'un premier tronçon d'extrémité libre avant d'un premier arbre à l'intérieur d'un second tronçon d'extrémité libre arrière d'un second arbre creux complémentaire, qui appartiennent notamment à un groupe motopropulseur.

### Résumé de l'invention

L'invention propose un système d'aide au centrage d'un premier tronçon d'extrémité libre avant d'un premier arbre à l'intérieur d'un second tronçon d'extrémité libre arrière d'un second arbre creux complémentaire, qui appartiennent notamment à un groupe motopropulseur,
caractérisé en ce que le système comporte une tête amovible de centrage qui est rapportée sur le premier tronçon d'extrémité libre avant du premier arbre.

Selon d'autres caractéristiques du système d'aide :
- la tête de centrage comporte un tronçon avant de centrage qui est conformé en ogive ;
- la tête de centrage comporte des moyens de centrage de la tête de centrage par rapport au premier tronçon d'extrémité libre avant du premier arbre ;
- la tête de centrage comporte un trou axial débouchant pour le passage de la tige d'une vis axiale de fixation de la tête de centrage sur le premier tronçon d'extrémité libre avant du premier arbre ;
- un tronçon arrière de la tête de centrage comporte un manchon arrière de centrage qui est apte à être reçu axialement dans un trou axial complémentaire formé dans le premier tronçon d'extrémité libre avant du premier arbre.

L'invention propose aussi un groupe motopropulseur de véhicule automobile qui comporte :
- une machine électrique comportant un premier arbre de rotor tournant ;
- et un mécanisme de transmission adjacent qui comporte un second arbre primaire tournant qui est lié en rotation au premier arbre de rotor,
caractérisé en ce que le centrage et l'introduction axiale d'un premier tronçon d'extrémité libre avant du premier arbre de rotor à l'intérieur d'un second tronçon d'extrémité libre arrière de l'arbre primaire est réalisé au moyen d'un système selon l'invention.

Selon d'autres caractéristiques du groupe motopropulseur :
- l'arbre primaire est creux sur toute sa longueur pour permettre d'enlever la tête amovible de centrage après l'assemblage de l'arbre de rotor et de l'arbre primaire ;
- le premier tronçon d'extrémité libre avant du premier arbre de rotor comporte un trou axial de centrage de la tête de centrage ;
- le premier tronçon d'extrémité libre avant du premier arbre de rotor comporte un trou axial taraudé apte à recevoir la tige filetée d'une vis axiale de fixation de la tête de centrage sur le premier tronçon d'extrémité libre avant du premier arbre de rotor ;
- le premier arbre de rotor comporte, successivement axialement d'avant en arrière, une partie d'extrémité avant cannelée extérieurement, et une partie adjacente qui délimite une portée cylindrique lisse, et le groupe motopropulseur comporte une bague d'étanchéité dont au moins une lèvre d'étanchéité, radialement intérieure, coopère avec la portée cylindrique lisse.

### Brève descriptions des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une vue schématique en section par un plan axial d'un exemple de réalisation d'un groupe motopropulseur électrique ;

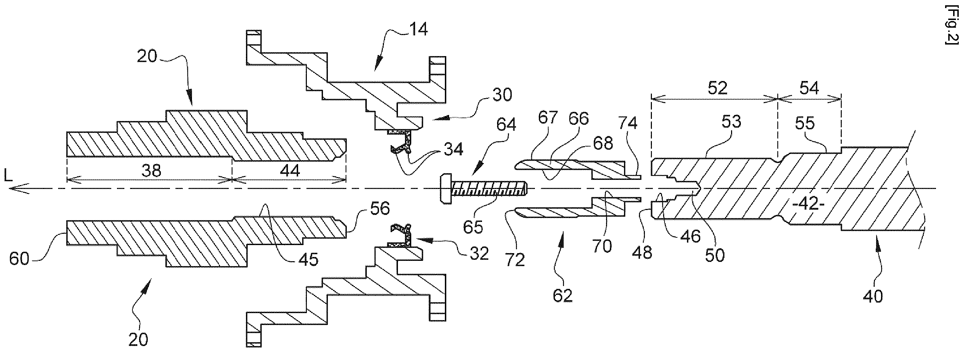

[Fig.2] - la figure 2 est une vue schématique en perspective éclatée de certains des composants du groupe motopropulseur électrique de la figure 1, en association avec la tête de centrage selon l'invention et sa vis de fixation ;
[Fig.3] - la figure 3 est une vue schématique en section axiale qui illustre une première étape d'assemblage des composants du groupe motopropulseur électrique de la figure 1 au moyen du système d'aide au centrage selon l'invention ;
[Fig.4] - la figure 4 est une vue analogue à celle de la figure 3 qui illustre une étape suivante de l'assemblage ;
[Fig.5] - la figure 5 est une vue analogue à celle de la figure 4 qui illustre une étape suivante de l'assemblage ;
[Fig.6] - la figure 6 est une vue analogue à celle de la figure 5 qui illustre une étape suivante de l'assemblage ;
[Fig.7] - la figure 7 est une vue analogue à celle de la figure 6 qui illustre une étape suivante de l'assemblage ;
[Fig.8] - la figure 7 est une vue analogue à celle de la figure 3 sur laquelle l'assemblage des deux arbres est réalisé selon l'état de la technique, sans utiliser un système d'aide à l'assemblage selon invention.

### Description détaillée de l'invention

### Description du mode de réalisation selon l'invention

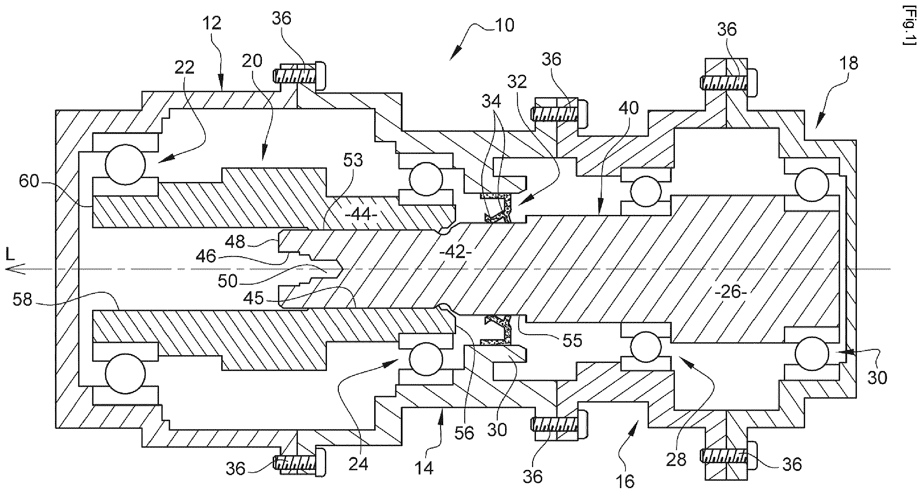

Pour la description de l'invention et la compréhension des revendications, on adoptera à titre non limitatif une orientation axiale selon un axe longitudinal L qui correspond à l'axe central du groupe motopropulseur électrique illustré à la figure 1 et qui est orienté axialement d'arrière vers l'avant (De la droite vers la gauche en considérant les figures).

Dans la description qui va suivre, des éléments identiques, similaires ou analogues seront désignés par les mêmes chiffres de référence.

Successivement de gauche à droite, le groupe motopropulseur électrique 10 représenté à la figure 1 comporte un carter 12 de fermeture du mécanisme de transmission, un carter 14 de réducteur différentiel, un carter 16 de machine électrique, et un autre carter 18 de fermeture de la machine électrique.

Les quatre carters 12 à 18 sont alignés axialement et chaque paire de carters adjacents 12-14, 14-16 et 16-18 est fixée par des jeux de vis axiales de fixation 36.

Ici, et à titre d'exemple non limitatif, les quatre carters logent successivement :
- un arbre primaire creux 20 qui est monté tournant par rapport au carter de fermeture 12 et au carter réducteur de différentiel 14 au moyen de roulements 22 et 24 ;
- et le rotor 26 qui est monté tournant par rapport au carter 16 de machine électrique et au carter 18 de fermeture au moyen de roulements 28 et 30.

Entre les roulements 24 et 28, le carter 14 de réducteur différentiel comporte une couronne interne 30 qui porte une bague 32 d'étanchéité qui comporte deux lèvres d'étanchéité 34, radialement intérieures.

Le rotor 26 de la machine électrique comporte un arbre de rotor 40 qui s'étend axialement vers l'avant au-delà du roulement 28.

Le système d'aide au centrage selon l'invention est mis en oeuvre pour l'assemblage et l'accouplement de l'arbre primaire creux 20 et de l'arbre de rotor 40 du rotor 26.

Plus précisément, l'arbre de rotor 40 (Qui est le premier arbre au sens de l'invention) comporte un premier tronçon d'extrémité libre avant 42, et l'arbre primaire creux 20 (Qui est le second arbre au sens de l'invention) comporte un second tronçon d'extrémité libre arrière 44.

Le tronçon d'extrémité libre avant 42 de l'arbre de rotor 40 comporte un trou axial 46 de centrage qui débouche dans la face radiale d'extrémité avant 48.

Le tronçon d'extrémité libre avant 42 comporte aussi un trou axial taraudé 50 qui est apte à recevoir une tige filetée d'une.

Le trou axial taraudé 50 prolonge axialement le trou axial de centrage 46.

Extérieurement, le tronçon d'extrémité libre avant 42 comporte, successivement axialement d'avant en arrière, une partie d'extrémité avant 52 est cannelée extérieurement, avec des cannelures 53, et une partie adjacente 54 qui délimite une portée cylindrique lisse 55.

Le diamètre extérieur de la portée cylindrique lisse 55 est supérieur au diamètre extérieur de la partie avant cannelée 52.

Le tronçon d'extrémité libre arrière 44 de l'arbre primaire creux 20 est un tronçon cannelé intérieurement avec des cannelures 45 qui s'étend axialement vers l'avant depuis la face radiale d'extrémité arrière 56.

Les tronçons cannelés 52 et 44 sont complémentaires de manière à permettre l'accouplement en rotation des deux arbres 40 et 20.

Le tronçon d'extrémité libre arrière 44 cannelé intérieurement 45 se prolonge par un alésage 58 qui s'étend axialement jusqu'à la face radiale d'extrémité avant 60.

Ainsi, l'arbre primaire 20 est creux sur toute sa longueur entre ses deux faces radiales d'extrémité avant 60 et arrière 58.

Dans l'état monté et assemblé des différents composants du groupe motopropulseur 10 représenté à la figure 1, la partie avant 52 cannelée extérieurement 53 de l'arbre de rotor 40 est reçue axialement dans le tronçon d'extrémité libre arrière 44 cannelé intérieurement 45 de l'arbre creux 20.

Dans cette position axiale, les lèvres d'étanchéité 34 de la bague d'étanchéité 32 coopèrent avec la portée lisse 55 pour assurer l'étanchéité du mécanisme de transmission.

Selon l'état de la technique illustré à la figure 8, lors des opérations d'assemblage - en vue d'introduire axialement la partie avant 52 cannelée extérieurement 53 de l'arbre de rotor 40 dans le tronçon d'extrémité libre arrière 44 cannelé intérieurement 45 de l'arbre creux 20 - les deux arbres 40 et 20 et leurs tronçons d'extrémité libre associés 42 et 44 peuvent ne pas être parfaitement coaxiaux.

L'écart radial « e » entre les axes des deux arbres 40 et 20 peut alors être tel que les lèvres d'étanchéité 34 glissent axialement le long des cannelures extérieures 53 avec les risques important mentionnés en préambule d'endommager définitivement les lèvres d'étanchéité d'étanchéité 34.

Pour éviter ce risque, l'invention propose d'utiliser une tête amovible de centrage 62 qui, en vue de l'assemblage est rapportée sur le tronçon d'extrémité libre avant 42 de l'arbre 40 au moyen d'une vis de fixation 64.

Le corps 66 de la tête de centrage 62 est de forme générale tubulaire cylindrique et il comporte un alésage central étagé traversant comportant un tronçon avant 68 de grand diamètre et un tronçon arrière 70 de plus petit diamètre qui constitue un trou axial pour le passage de la tige filetée 65 de la vis 64 de fixation de la tête de centrage 62.

Le tronçon d'extrémité avant 72 de la tête de centrage 62 est conformé en ogive.

La paroi latérale externe 67 du corps 66 est lisse.

La tête de centrage 62 comporte un prolongement arrière en forme de manchon tubulaire 74 qui, pour la fixation et le centrage de la tête de centrage 62 est reçu axialement dans le trou axial complémentaire de centrage 46 du tronçon d'extrémité libre avant 42 de l'arbre de rotor 40.

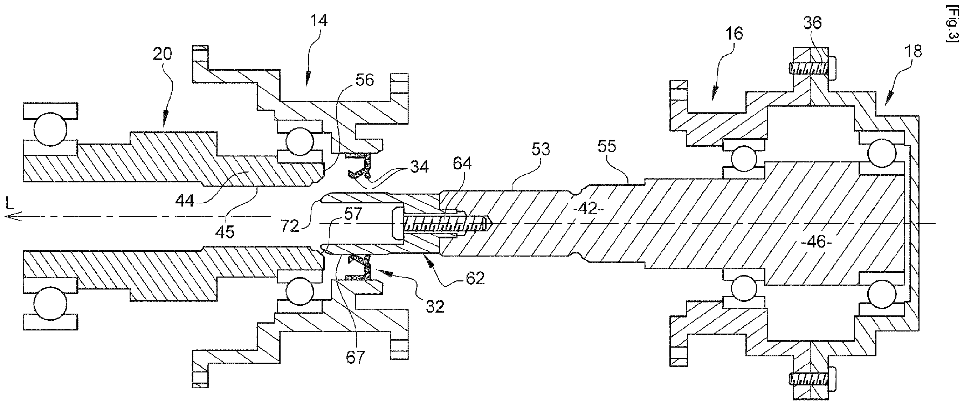

La fixation de la tête de centrage est assurée par la vis de fixation 64 selon l'agencement illustré aux figures 3 à 6.

Un exemple de mise en oeuvre de la tête de centrage 62 est illustré aux figures 3 à 8. Comme on peut le voir à la figure 3n après avoir fixé la tête de centrage 62 à l'extrémité avant de l'arbre de rotor 40, on réalise un sous ensemble arrière comportant les deux carters 16 et 18 et le rotor 26, et un sous-ensemble avant comportant le carter 14 et l'arbre primaire creux 20, ainsi que la bague d'étanchéité 32.

En provoquant un déplacement axial relatif des deux sous-ensembles - par exemple en déplaçant le sous-ensemble arrière vers l'avant, on peut voir que c'est la paroi latérale externe lisse 67 du corps 66 de la tête de centrage qui est éventuellement en contact avec les lèvres d'étanchéité 34.

Le tronçon d'extrémité avant en ogive 72 arrive au contact du chanfrein 57 d'entrée dans le tronçon d'extrémité libre arrière 44 cannelé intérieurement 45 de l'arbre primaire 20.

Cette coopération permet de centrer la tête de centrage - et donc l'arbre de rotor 40 avec son tronçon d'extrémité libre avant 42 cannelé extérieurement 53 - par rapport à l'arbre primaire 20.

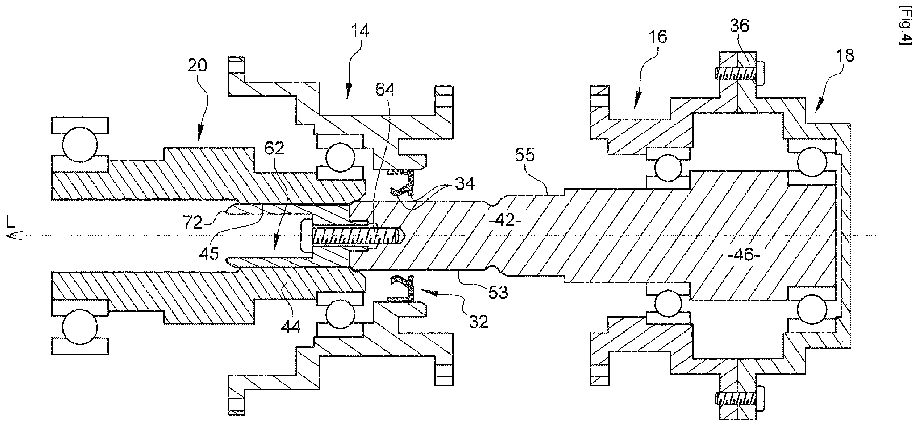

Du fait de ce centrage, la course axiale peut se poursuivre comme illustré à la figure 4 sans aucun contact des lèvres d'étanchéité 34 avec les cannelures externes 53.

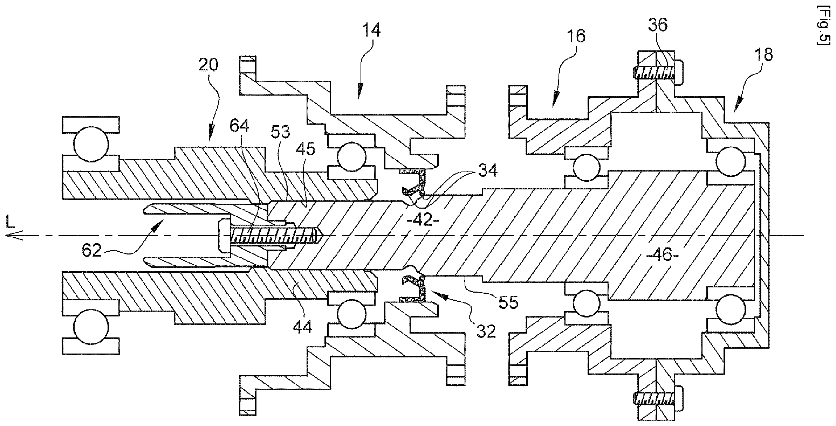

Dans la position axiale illustrée à la figure 5, les lèvres d'étanchéité 34 viennent en contact avec la portée lisse 55, sans qu'elles aient été endommagées.

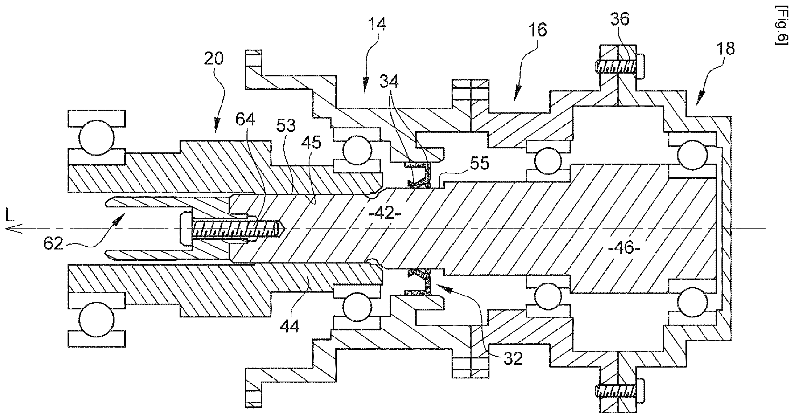

Le déplacement axial relatif des deux sous-ensembles est terminé lorsque la position axiale illustrée à la figure 6 est atteinte.

Dans cette position, il est possible de fixer entre eux les deux carters 14 et 16 au moyen de vis de fixation 36.

On peut ensuite enlever la tête de centrage 62 en ôtant la vis 64 et en l'extrayant axialement vers l'avant à travers l'alésage 58 de l'arbre creux.

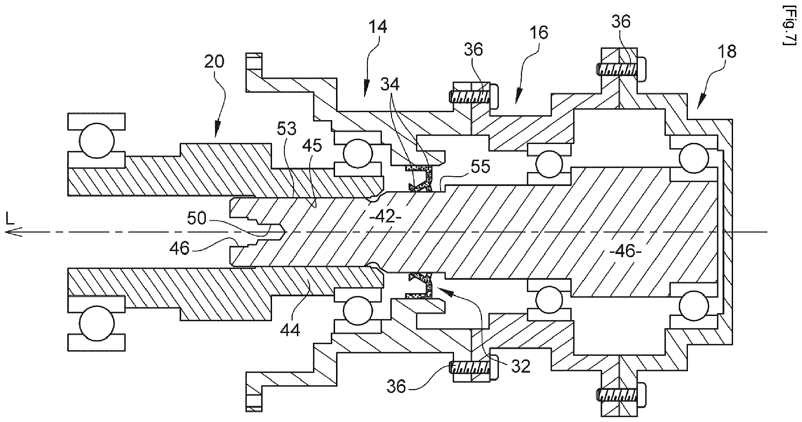

Dans cet état illustré à la figure 7, il ne reste plus qu'à monter le carter 12 de fermeture et à le fixer sur le carter 12 pour terminer l'assemblage du groupe motopropulseur 10 illustré à la figure 1.

On note que le procédé d'assemblage qui vient d'être décrit diffère de celui mis en oeuvre sans tête de centrage et tel qu'illustré à la figure 8 dans lequel le sous-ensemble avant comporte le carter de fermeture 12 préalablement monté et fixé sur le carter 12.

## Revendications

1. Système d'aide au centrage d'un premier tronçon d'extrémité libre avant (42) d'un premier arbre (40) à l'intérieur d'un second tronçon d'extrémité libre arrière (44) d'un second arbre creux (20) complémentaire, qui appartiennent notamment à un groupe motopropulseur (10),
**caractérisé en ce que** le système comporte une tête amovible de centrage (62) qui est rapportée sur le premier tronçon d'extrémité libre avant (42) du premier arbre (40).

2. Système d'aide selon la revendication 1, **caractérisé en ce que** la tête de centrage (62) comporte un tronçon avant (72) de centrage qui est conformé en ogive.

3. Système d'aide selon l'une de revendications 1 ou 2, **caractérisé en ce que** la tête de centrage (62) comporte des moyens (74) de centrage de la tête de centrage (62) par rapport au premier tronçon d'extrémité libre avant (42) du premier arbre (40).

4. Système d'aide selon la revendication 3, **caractérisé en ce que** la tête de centrage (62) comporte un trou axial débouchant (70) pour le passage de la tige (65) d'une vis axiale (64) de fixation de la tête de centrage (62) sur le premier tronçon d'extrémité libre (42) avant du premier arbre (40).

5. Système d'aide selon la revendication 4, **caractérisé en ce qu'**un tronçon arrière de la tête de centrage (62) comporte un manchon arrière de centrage (74) qui est apte à être reçu axialement dans un trou axial complémentaire (46) formé dans le premier tronçon d'extrémité libre avant (42) du premier arbre (40).

6. Groupe motopropulseur (10) de véhicule automobile qui comporte :
- une machine électrique comportant un premier arbre de rotor (40) tournant ;
- et un mécanisme de transmission adjacent qui comporte un second arbre primaire (20) tournant qui est lié en rotation au premier arbre de rotor (40),
**caractérisé en ce que** le centrage et l'introduction axiale d'un premier tronçon d'extrémité libre (42) avant du premier arbre de rotor (40) à l'intérieur d'un second tronçon d'extrémité libre arrière (44) de l'arbre primaire (20) est réalisé au moyen d'un système selon l'une quelconque des revendications précédentes.

7. Groupe motopropulseur (10) selon la revendication précédente,
**caractérisé en ce que** l'arbre primaire (20) est creux sur toute sa longueur pour permettre d'enlever la tête amovible de centrage (62) après l'assemblage de l'arbre de rotor (40) et de l'arbre primaire (20).

8. Groupe motopropulseur selon la revendication 6, **caractérisé en ce que** le premier tronçon d'extrémité libre avant (42) du premier arbre de rotor (40) comporte un trou axial (46) de centrage de la tête de centrage (62).

9. Groupe motopropulseur selon la revendication 6, **caractérisé en ce que** le premier tronçon d'extrémité libre avant (42) du premier arbre de rotor (40) comporte un trou axial taraudé (50) apte à recevoir la tige filetée (65) d'une vis axiale (64) de fixation de la tête de centrage (62) sur le premier tronçon d'extrémité libre avant (42) du premier arbre de rotor (40).

10. Groupe motopropulseur selon la revendication 6, **caractérisé en ce que** le premier arbre de rotor (40) comporte, successivement axialement d'avant en arrière, une partie d'extrémité avant (52) cannelée extérieurement (53), et une partie adjacente (54) qui délimite une portée cylindrique lisse (55), et **en ce qu'**il comporte une bague d'étanchéité (32) dont au moins une lèvre d'étanchéité (34), radialement intérieure, coopère avec la portée cylindrique lisse (55).

## Patentansprüche

1. Hilfssystem zur Zentrierung eines ersten vorderen freien Endabschnitts (42) einer ersten Welle (40) im Inneren eines zweiten hinteren freien Endabschnitts (44) einer zweiten komplementären Hohlwelle (20), die insbesondere zu einer Motorantriebsanlage (10) gehören, **dadurch gekennzeichnet, dass** das System einen entfernbaren Zentrierkopf (62) umfasst, der an dem ersten vorderen freien Endabschnitt (42) der ersten Welle (40) angebracht ist.

2. Hilfssystem nach Anspruch 1, **dadurch gekennzeichnet, dass** der Zentrierkopf (62) einen vorderen Zentrierabschnitt (72) umfasst, der spitzbogenförmig ausgebildet ist.

3. Hilfssystem nach einem der Ansprüche 1 oder 2, **dadurch gekennzeichnet, dass** der Zentrierkopf (62) Mittel (74) zum Zentrieren des Zentrierkopfes (62) in Bezug auf den ersten vorderen freien Endabschnitt (42) der ersten Welle (40) umfasst.

4. Hilfssystem nach Anspruch 3, **dadurch gekennzeichnet, dass** der Zentrierkopf (62) eine axiale Durchgangsbohrung (70) für den Durchgang des Schafts (65) einer axialen Schraube (64) zur Befestigung des Zentrierkopfes (62) an dem ersten vorderen freien Endabschnitt (42) der ersten Welle (40) umfasst.

5. Hilfssystem nach Anspruch 4, **dadurch gekennzeichnet, dass** ein hinterer Abschnitt des Zentrierkopfes (62) eine hintere Zentrierbuchse (74) umfasst, die dazu angepasst ist, in einer komplementären axialen Bohrung (46), die in dem ersten vorderen freien Endabschnitt (42) der ersten Welle (40) gebildet ist, axial aufgenommen zu werden.

6. Motorantriebsanlage (10) eines Kraftfahrzeugs, die Folgendes umfasst:
- eine elektrische Maschine, die eine erste Rotordrehwelle (40) umfasst;
- und einen angrenzenden Übertragungsmechanismus, der eine zweite primäre Drehwelle (20) umfasst, die mit der ersten Rotorwelle (40) drehfest verbunden ist,
**dadurch gekennzeichnet, dass** das Zentrieren und das axiale Einführen eines ersten vorderen freien Endabschnitts (42) der ersten Rotorwelle (40) in das Innere eines zweiten hinteren freien Endabschnitts (44) der primären Welle (20) mit Hilfe eines Systems nach einem beliebigen der vorhergehenden Ansprüche erfolgt.

7. Motorantriebsanlage (10) nach dem vorhergehenden Anspruch,
**dadurch gekennzeichnet, dass** die primäre Welle (20) über ihre gesamte Länge hohl ist, um nach dem Zusammenbau der Rotorwelle (40) und der primären Welle (20) das Entfernen des entfernbaren Zentrierkopfes (62) zu gestatten.

8. Motorantriebsanlage nach Anspruch 6, **dadurch gekennzeichnet, dass** der erste vordere freie Endabschnitt (42) der ersten Rotorwelle (40) eine axiale Bohrung (46) zum Zentrieren des Zentrierkopfes (62) umfasst.

9. Motorantriebsanlage nach Anspruch 6, **dadurch gekennzeichnet, dass** der erste vordere freie Endabschnitt (42) der ersten Rotorwelle (40) eine axiale Gewindebohrung (50) umfasst, die dazu angepasst ist, den Gewindeschaft (65) einer axialen Schraube (64) zur Befestigung des Zentrierkopfes (62) an dem ersten vorderen freien Endabschnitt (42) der ersten Rotorwelle (40) aufzunehmen.

10. Motorantriebsanlage nach Anspruch 6, **dadurch gekennzeichnet, dass** die erste Rotorwelle (40) in axialer Richtung von vorne nach hinten nacheinander einen vorderen Endteil (52) mit Außenriffelung (53) und einen angrenzenden Teil (54), der eine glatte Auflagefläche (55) begrenzt, umfasst und dass sie einen Dichtungsring (32) umfasst, von dem mindestens eine radial innenliegende Dichtungslippe (34) mit der glatten Auflagefläche (55) zusammenwirkt.

## Claims

1. System for assisting with the centring of a first, front free end section (42) of a first shaft (40) inside a second, rear free end section (44) of a second, complementary hollow shaft (20), which belong in particular to a powertrain (10),
**characterized in that** the system has a removable centring head (62) which is attached to the first, front free end section (42) of the first shaft (40).

2. Assistance system according to Claim 1, **characterized in that** the centring head (62) has a front centring section (72) that is given an ogival shape.

3. Assistance system according to either of Claims 1 and 2, **characterized in that** the centring head (62) has means (74) for centring the centring head (62) with respect to the first, front free end section (42) of the first shaft (40).

4. Assistance system according to Claim 3, **characterized in that** the centring head (62) has an axial through-hole (70) for the passage of the shank (65) of an axial screw (64) for fastening the centring head (62) to the first, front free end section (42) of the first shaft (40).

5. Assistance system according to Claim 4, **characterized in that** a rear section of the centring head (62) has a rear centring sleeve (74) that is able to be received axially in a complementary axial hole (46) formed in the first, front free end section (42) of the first shaft (40).

6. Motor vehicle powertrain (10) that has:
- an electric machine having a first, rotary rotor shaft (40);
- and an adjacent transmission mechanism that has a second, rotary primary shaft (20) that is rotationally linked to the first, rotor shaft (40),
**characterized in that** the centring and the axial introduction of a first, front free end section (42) of the first, rotor shaft (40) into a second, rear free end section (44) of the primary shaft (20) is realized by means of a system according to any one of the preceding claims.

7. Powertrain (10) according to the preceding claim, **characterized in that** the primary shaft (20) is hollow along its entire length so as to make it possible to remove the removable centring head (62) after assembly of the rotor shaft (40) and the primary shaft (20).

8. Powertrain according to Claim 6, **characterized in that** the first, front free end section (42) of the first, rotor shaft (40) has an axial hole (46) for centring the centring head (62).

9. Powertrain according to Claim 6, **characterized in that** the first, front free end section (42) of the first, rotor shaft (40) has a tapped axial hole (50) able to receive the threaded shank (65) of an axial screw (64) for fastening the centring head (62) to the first, front free end section (42) of the first, rotor shaft (40).

10. Powertrain according to Claim 6, **characterized in that** the first, rotor shaft (40) has, axially in succession from front to rear, a front end part (52) that is externally splined (53), and an adjacent part (54) that delimits a plain cylindrical bearing surface (55), and **in that** it has a sealing ring (32) of which at least one sealing lip (34), which is radially on the inside, cooperates with the plain cylindrical bearing surface (55) .
